# EUROPEAN PATENT APPLICATION

(11) **EP 2 600 296 A1**
(43) Date of publication of application: **05.06.2013**
(21) Application number: 11461542.0
(22) Date of filing: 30.11.2011
(51) Int. Cl.: G06Q 30/02

(54) **System and method for management of advertising services with use of client's location data**

(71) Applicant: Geomobile Sp. z o.o., 93-578 Lodz (PL)
(72) Inventor: Rajewski, Robert, 93-578 Lodz (PL)
(74) Representative: Pawlowski, Adam

(57) **Abstract**

In a system for management of advertising services with a use of data on client's location there is a server bidirectionally connected to at least one client device, wherein the server comprises a database for storing information on a profile of at least one user being in possession of the client device, for storing information services data including area covered by such services, wherein the client device is configured to send, to the server, information on its location, whereas the server is configured to generate a response, based on a received information on location of the client device, comprising information matching the profile of the user being in possession of the client device.

## Description

The object of the present invention is a system and method for management of advertising services with use of client's location data. The invention is based on a hardware and software solution, which provides tailored and precisely defined information, related to location, to users. The location is user's location or a location the user will be in in the near future. The system manages services based on location data and users' individual preferences.

Advertising services implemented by means of traditional media such as advertising posters, television, radio or the Internet are, by their definition, directed to all recipients, viewers, listeners and therefore also those who will not necessarily appreciate the information as meaningful. For example, an advertisement of travel agency placed at an entrance to an airport will also be addressed to those who return from their vacation and will not be looking, in the near future, for information on holiday offers. Advertisers are aware of the fact that the majority of their budget for advertising campaigns is wasted. At the same time it is difficult to identify such ineffectiveness and its elimination.

A further difficulty for the advertisers is the fact that each day the recipients are exposed to media (press, radio, television) for several hours.

In recent years the size and strength of Internet advertising has grown significantly. Advertisers often use this advertising method because it is more tailored to users' interests: For example it may be directed to users of a given portal having a narrow speciality. At the same time the advertisers, who use the Internet network, are running general, wide audience campaigns similarly to television campaigns, where an advertisement is placed on main pages of the most popular Internet portals. In case of the second of the mentioned methods, the probability of matching preferences of a potential client is rather low, but it is compensated by the number of clients visiting the main page of the portal. In case of the first method the number of potential advertisement recipients is much lower but their interest in a product or service is presumably much higher.

Some of the Internet services relate shown content to information about a user, which they possess, for example based on search queries input by a user to a search engine. Owing to query analysis, the system may determine, which content a user is interested in presently. Thanks to matching advertisements to users, the precision of advertisements delivery and their efficiency is greatly increased. Such systems may be called keywords-oriented, wherein advertisements are selected based on keywords that are parts of queries formulated by users.

One of disadvantages of keywords-oriented systems is that such systems are available to a broad group of users and the same advertisement may be presented to users from different countries. It is however frequent that the advertised product is available only in one of the two countries. Therefore keywords-oriented systems are preferred by global companies having their sales networks in different regions, countries even continents. Otherwise, information valuable for one user may be completely useless for other users located in different places.

Internet advertising faces a problem of delivery of content to a local and only local recipient.

From a US patent no. 5,155,591 -"Method and apparatus for providing demographically targeted television commercials", there is known a system including demographic information in delivery and presentation of advertisements. Different commercial information is delivered to different recipients depending on given demographic information. The demographic information is input to the system by users. A drawback of the system is that the demographic information assumes a single location of a user and is not adapted for presenting content in real time - it does not include in the process the fact that a recipient of advertisements may move.

From a US patent no. 5,432,542 - "Television receiver location identification", there is known a method in which messages related to location are transmitted and filtered by users' receivers that have permanently set and embedded one or more locations. In this system instead of one location defined based on demographic data, a multitude of locations may be defined. A drawback of the system is mainly the fact that it is not known in which location a user is at as well as what are the user's expectations regarding received content. Therefore a user of the aforementioned system receives information related to a plurality of locations and has to analyse this information in order to discard those that are related to locations different from the location of the user.

Additionally, there is a need of taking into account location as well as advertisement time in a process of advertisements selection for different users. For example, at a given location at 15:00 time, a user may be interested primarily in information about restaurants. Such information may also be dependent on whether a user frequently visits a given location, which could indicate whether he lives or works nearby or whether he visits the location for the first time, which could in turn indicate a tourist visit. The above assumptions of the system could be further refined directly with information received from the user.

Accordingly, there is a need of implementing a system delivering information or advertisements based on location. For example, a user located at place A may be interested in information on locations A, B and C and not on locations D, E, which although being of interest to the user are at that moment in time remote and information on them may be partly or completely useless.

Additionally, advertisers expect ability to tailor advertisements to users in selected locations. Therefore, there is a need for a system and method of determining and using information on location in information and advertising services

The aim of the present invention is to create the aforementioned system and method for management of information and advertising services utilising data on user's location and user's profile personalised based on information entered by the user, for example, declared interest in restaurants and cultural events and on user's behaviour (activity) stored by the system (e.g. Frequent searches in categories i.e. museums, pharmacists).

The object of the present invention is that in a system for management of advertising services with a use of data on client's location there is a server bidirectionally connected to at least one client device, wherein the server comprises a database for storing information on a profile of at least one user being in possession of the client device, for storing information services data including area covered by such services, wherein the client device is configured to send, to the server, information on its location, whereas the server is configured to generate a response, based on received information about location of the client device, comprising information matching the profile of the user being in possession of the client device.

Preferably the information on location is retrieved by the client device from a GPS or A-GPS or Cell ID system.

In one embodiment user's profile comprises information on which categories of information are among user's interests.

In another exemplary embodiment the server is configured to include in the generated response area located nearby received location.

Preferably the server is configured to store, in a memory, maps of areas subject to informational services.

In an exemplary embodiment the server is configured to receive, from the client device, in addition to information on location, information on a point in time, the return information from the server shall concern.

In another embodiment the server is configured to process the received information in order to create a statistical database for automatic recognition of preferences of a selected user and/or popularity of a given service.

Preferably the server is configured to store in a non-volatile memory data of user's profile comprising information on frequency the server is to send messages to a client device.

Preferably the server is configured to, while updating a user's profile, utilise a case reasoning method or neuron network or genetic algorithm or any combination of the aforementioned methods.

The object of the present invention is also a method for management of advertising services with a use of data on client's location wherein the method has a step of linking with a bidirectional connection, a server to at least one client device, storing at the server, in a database, information on a profile of at least one user being in possession of the client device, and storing information services data including area covered by such services, sending from the client device, to the server, information on its location, generating at the server a response, based on a received information on location of the client device, comprising information matching the profile of the user being in possession of the client device.

Preferably the information on location is retrieved by the client device from a GPS or A-GPS or Cell ID system.

In one embodiment user's profile comprises information on which categories of information are among user's interests.

In another exemplary embodiment the server includes in the generated response, area located nearby received location.

Preferably the server stores in a non-volatile memory maps of areas subject to informational services.

In an exemplary embodiment the server receives, from the client device, in addition to information on location, information on a point in time, the return information from the server shall concern.

The organisation of the system according to the present invention, which comprises a server and at least one client application installed at a client's terminal, is shown in a drawing the separate figures of which present:
Fig. 1 presents a method of operation of the system in order to generate information originating from commercial entities;
Fig. 2 presents a method of operation of the system in order to generate information originating from public entities;
Fig. 3 presents a method of operation of the system in order to generate information originating from individual users;
Fig. 4 shows a block diagram of the client - server system;
Fig. 5A to Fig. 5D present user interface of an exemplary client application; and
Fig. 6 presents an organisation of an artificial intelligence module located at system's server.

Mobile advertising has gained an advantage over other media due to the fact that a consumer has in practice, for almost all day, at arm's length his mobile phone or other personal device such as a tablet or a netbook.

Higher effectiveness of mobile advertising is further enhanced by the speed of modern society life and the fact that employees shall always be in contact with their supervisors or clients.

Present marketing evolves in a direction of individualised communication aimed exactly at a selected and interested recipient. Hence, corporations seek methods for reaching their individual clients in a selective way, which would be perfectly fit to clients' expectations - not, as it happened up to now, in an intrusive and indiscriminate way.

Similar expectations are shown by target recipients. Presently they receive too many advertisements in a form of short text messages (SMS), which are generally of no interest to receipients.

The object of the present invention is a solution, which provides added value in a form of personalised information dependent on user's location. The offered content fits the needs, which a consumer identifies, thereby designating them as important and of interest.

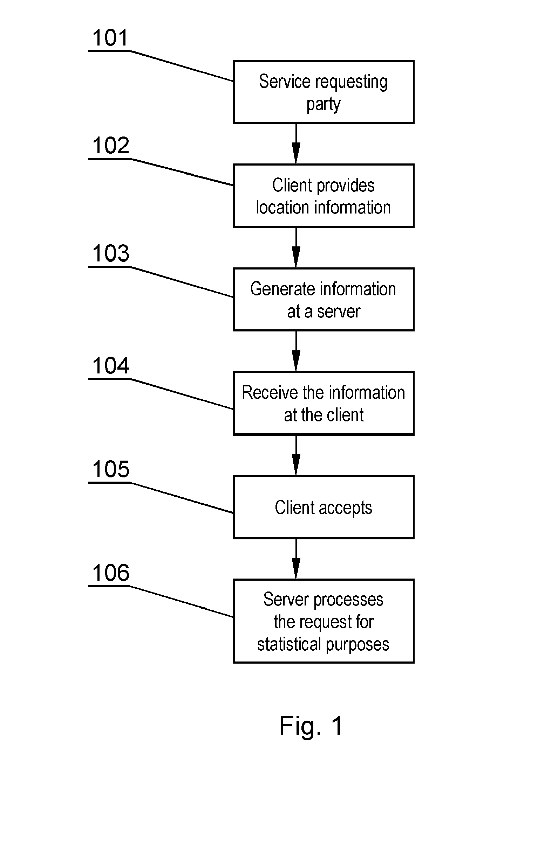

Fig. 1 presents a method of operation of the system in order to generate information originating from commercial entities such as shops, restaurants, cinemas, theatres or museums. Such solution is a tool allowing users of mobile phones to receive information on subjects, selected by themselves, having regard to present location (e.g. Weather, current cultural events, nearby monuments), to receive information on present offers, promotions of promotional coupons for purchase of products offered by entities localised in the nearby area.

The service 101 is requested by a commercial entity, for example a network of restaurants. The commercial entity specifies area the service shall cover and its content, which may differ depending on location of a user and on distance from the nearest restaurant and may differ depending on time, particular time of day, particular week.

The client devices give their location 102. The location may be manually provided, directly from the user or obtained automatically using a geolocation service.

An example of a geolocation service is Global Positioning System, abbreviated as GPS. The GPS is a system of 24 satellites, which are at the Earth's orbit and circle around it twice a day broadcasting a radio signal. The signal comprises information on position and time, which allow for determining location at the receiver. The GPS system determines location with high accuracy. The location refers to a device comprising a GPS receiver. In majority of cases a user has the device with him, for example a cellular phone or a tablet.

The GPS determines location, which is subsequently matched against electronic maps stored in memory of a client's device or on a server.

Owing to this information, an advertiser may focus its offer on selected group of users, who with a high probability will show great interest in his offer. The presented solution has high usability for institutions working on safety of persons being within a given area.

The solution allows for addressing users with services of interactive information, tailored precisely to location and preferences of a given user. Tailored information is far more efficient for advertising that presently used mobile marketing, information of which, directed to users, is inaccurate because it is outside of a given user's interests and therefore treated by the user as useless spam and the information does not reach a recipient at a time allowing taking certain steps matching expectations of a sender of the information.

The present solution utilises existing, commonly used and yet constantly and dynamically improved IT infrastructure: cellular phones and satellites and GPS technology. Additionally, the system may use technology such as A-GPS, Wi-Fi (IEEE 802.11 in different versions), cell ID triangulation.

The A-GPS (Assisted GPS) technology is variation of the GPS system used in mobile phones, in which network operator's servers are used in order to decrease time required for a first determination of location. Such service must be supported by the operator, otherwise GPS will operate but the first lock on satellite signal will take longer.

Wi-Fi is a set of standards defined for creation of wireless computer networks. A specific use of Wi-Fi is setting up local area networks (LAN) using radio communication i.e. WLAN. Range of from several hundred meters to few kilometres and bandwidth of up to 300Mb/s, transmission on two channels simultaneously.

Cell ID triangulation is a technology utilising a parameter assigned by a mobile phone operator to separate cells defined within area of operator's network. The system has least accuracy because each cell covers an area of 500 meters from a base transceiver station (BTS).

After reception of information on location 120 from the client, the server generates a response 103 based on location and optionally other criteria such as demographic information or user's profile.

An integral part of the present solution are electronic maps of the world, server technology, providing basic functions of the service such as user monitoring in real time, dynamic matching, which allows to identify useful information for a user based on his profile, location and information from a database available at the time, proactive notifications, which allows for notifying users in a real time based on individual profiles and control of level of notifications ("active", "inactive" etc.)

The system also provides client software used by users to interact with the geolocation platform (profile change, status change etc.).

Messages are sent, to users of the database, relating to selected topics, for example information on place and rime of coming events, lectures or banquets - also optionally with a location map, information on monuments, restaurants etc., weather information.

In the next step, 104, client's device receives notifications from the server. At step 105 the client may accept the message, which results in presentation of detailed information and/or presentation of a map directing the user to a specific service and location.

At the last step 106, a server application adds data about the transaction to a statistical report, for example in order to automatically determine preferences of a user and/or popularity of a given service.

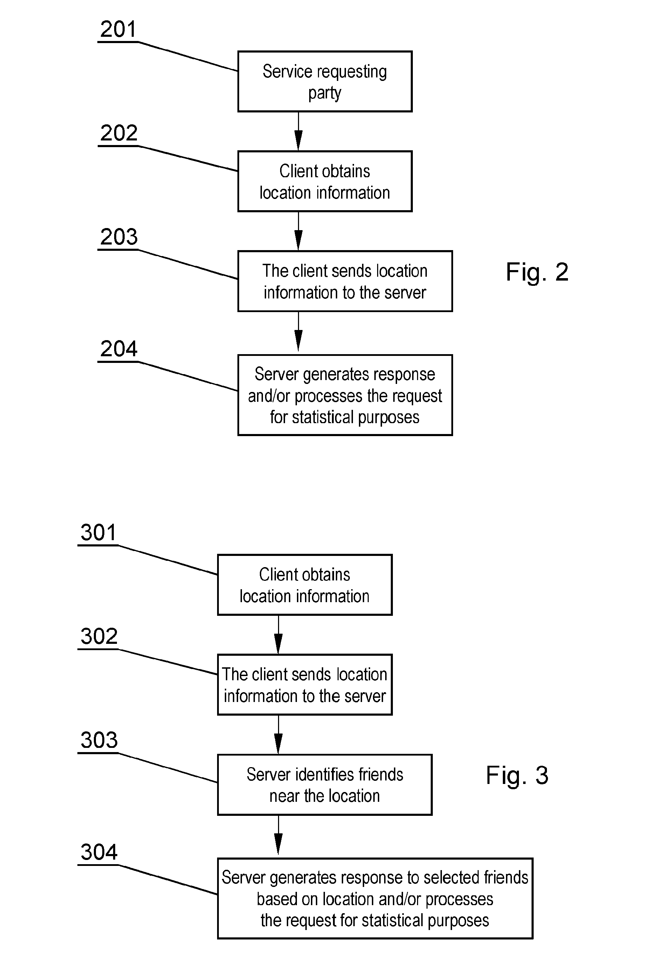

Fig. 2 presents a method of operation of the system in order to generate information originating from public entities, for example authorities, rescue units or traffic management offices, which access the programme of notifications 201 in a given area.

In order to use functions provided by the system a user has to install on his mobile phone (or other personal device) a client application and agree to accept messages.

The application is distributed for example via business clients and public institutions interested in the system. The application can be downloaded by users or sent to the users. The application has to be installed in the telephone and activated. The application may differ slightly depending on user's operating system (e.g. iOS, Android). The interface may be partly adapted to specific requirements of a business client or public institutions ordering the service. The basic functions of the client application are sending information to a management application at the server: "active", "inactive", "my location is (...)" etc. and reception with subsequent displaying of information sent by the management application: "Free appetiser at XYZ restaurant at (...) street in Warsaw", "Avalanche warning in the Tatra mountains" etc.

At the first step 202, the client's device obtains information on location, for example from a GPS. Next in step 203, the location is sent to the server. In response to the client, information 204 is sent, for example concerning avalanche warning for a defined area in the Tatra mountains (e.g. within 2 km radius from the avalanche centre).

In addition to its existing, typical functions, a cellular phone may therefore serve the user as a receiver of important (potentially life-saving) alerts.

Fig. 3 presents a method of operation of the system in order to generate information originating from individual users. At the first step 301, the client device obtains information on location, for example from a GPS. Next in step 302, the location is sent to the server. The task of client's application is to send a message to all friends in a nearby area or to a specified subgroup of users. At step 303 the server application identifies active friends nearby user's location and delivers to them a message from the user 304.

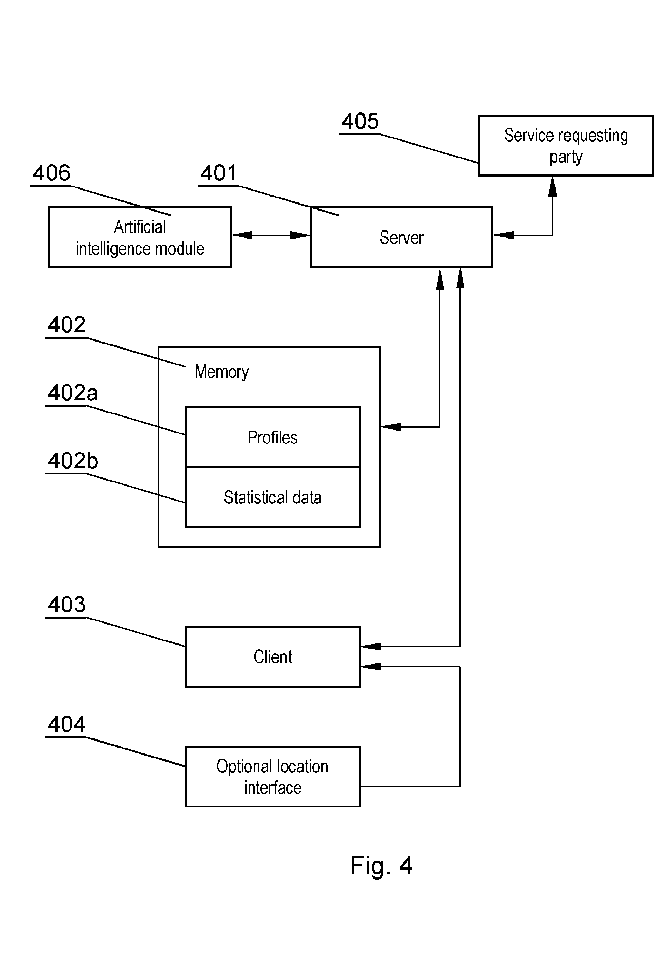

Fig. 4 shows a block diagram of the client - server system according to the present invention. The server 401 is a computer managing the system and providing services to clients 403 and setting tasks and configurations with institutions that request services 405. Such institution identifies the content, the area the content shall concern and optionally time at which the content shall be presented.

An essential feature is also creation of a database 402 comprising users' profile data (e.g. Telephone number, user preferences) 402a. The database allows for input of information on users both in a single input from a use (a connection via an Internet site) and batch form (data from a business client or lend from a marketing database). Memory of a database 402 is an integral element of the system and allows for storage and use of data of the users both by an operating system and statistical analysis, results of which may be stored by the system in the 402b memory.

At the server's side 401, an integral part of the solution is also an Internet site, which is a link allowing for authentication of users and input of their profiles.

A server or servers allow for creation and storage of database of users data, functioning of the management application, establishing connection with client applications and the Internet site both receiving and transmitting appropriate messages. The server also allows automatic updating of location data of business clients that participate in the system, storing all data regarding transactions (sent messages) flowing via the server, generating of reports, analyses and statistics

Applications or otherwise computer programs (software) are run by a processor with a use of system's resources such as memory, data bus etc. The applications are stored in a non-volatile memory, for example Flash or HDD.

The objective of the server 401 is also real-time monitoring, which allows for monitoring locations of objects (eg. Cellular phones) with a use of technologies such as GPS and Cell ID, dynamic matching, which allows to identify useful information for a user based on his profile, location and information from a database available at the time, proactive notifications, which allows for notifying users in a real time based on individual profiles and control of level of notifications ("active", "inactive", "I agree to participate" etc.)

The client device 403 optionally communicates with a geolocation interface 404 and comprises client software allowing users interaction with the geolocation platform (transmission of information on location, profile change, status change, reception of response from the server etc.). Geolocation may also take a form of defining a route along which a client will move in near future. Owing to transmission to server information on a planned route/travel of the client (start location, destination location) it is possible to provide the client with information on the given route not only on the current location.

The client will be able to decide also on a form and level of payments for the service. Settings of payments will be stored in memory 402. In case of individual clients the following options are available: in case of a declaration to receive only content matching a profile, for example weather data, information on coming cultural events or monuments, the client will himself specify thematic group, frequency of delivery thereby being requested for a specific service fee, in case of acceptance for reception of related content, provided by commercial entities, the service will be free of charge for a mobile phone user - the charges will be borne by the entity providing the given information or advertising message.

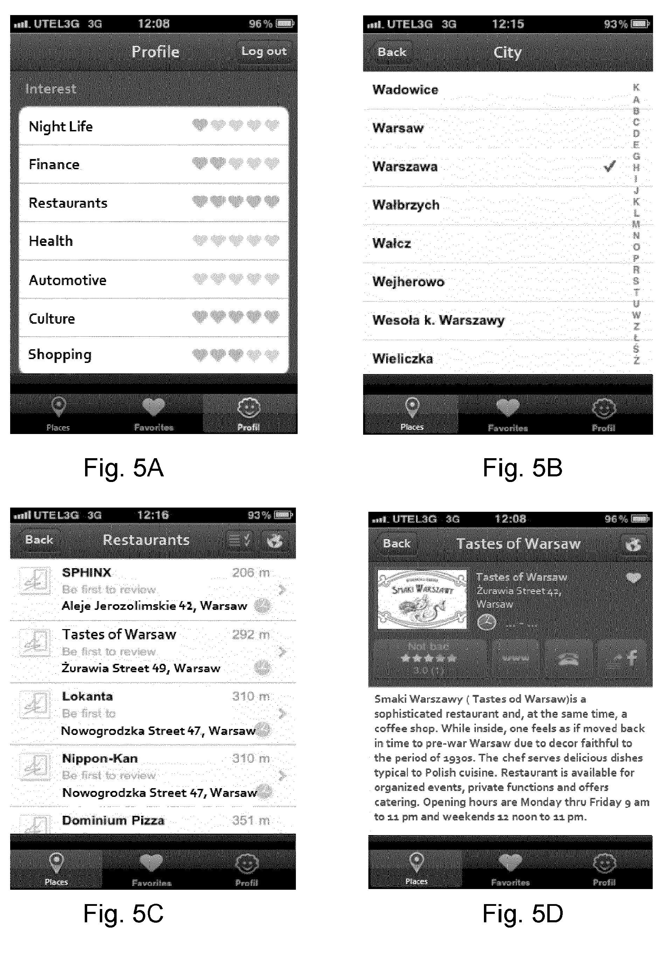

Fig. 5A to Fig. 5D present user interface of an exemplary client application. Fig. 5A presents an exemplary graphical user interface, which allows for selection of user's preferences. In the example given a user wishes to receive information on restaurants and cafeterias also on culture and art. With a lower intensity the user is interested in information on night life, finance and shopping centers.

Fig. 5B presents an exemplary graphical user interface, which allows for selection of user's preferences regarding location.

Fig. 5C presents an exemplary graphical user interface, which allows for selection by the user information from a list obtained as a response from the server. The screen presents a list of five restaurants and cafeterias.

Fig. 5D presents an exemplary graphical user interface, which allows for acquainting a user with details of a selected commercial offer.

One of the challenges present in the aforementioned system, is traffic directed to clients that may be generated by the system. A person who arrives at a main street of a large city may be overwhelmed by dozens of messages with various information, which may result in user's low level of satisfaction from the service.

The problem is solved by an artificial intelligence module 406, which optimises traffic directed to a given user so as to on one hand pass information from different advertisers but on the other hand not to overwhelm the user. The system learns user's preferences thereby being able to build individual users' profiles. For this purpose there is a possibility to use different technologies such as agents. In case of use of agents, each user has his own agent, which is an autonomous program running at the server side, whose task is to gather data for optimal selection of content for his owner. User's agent gathers, in such system, data by communicating with other agents responsible for selected content and/or representing specific advertisers and other institutions or by common agents dedicated to selected profiles of users.

Another approach employed is Case Base Reasoning (CBR): In this method the system gathers information sent to a given type of recipients and their reaction trying to classify a give recipient as precisely as possible and optimise transmission for a given group of recipients.

The basis for content selection is an assumption that similar recipients will expect similar content. Therefore, if a message appeared useful for a person X, it can be provided to other persons of the same gender, similar age and interests, being in a similar location, taking into account person's individual preferences. Other artificial intelligence methods such as as neuron networks or genetic algorithms and their combinations may also be use by the system according to the present invention in order to find and enhance the optimal solution.

Information used by the CBR module may include gender, date of birth, age, which may be used for filtering of certain content for example inappropriate for young persons. Additional information is last location, current geographic coordinates, stored as a space index compliant with MySQL GIS. For usefulness by the module, location may be translated to a pair of latitude and longitude. The attribute is required to run reasoning based on current position.

Each user has a described set of interests comprising a category, for example banks, shops; subcategory being a narrower declaration of interest (allows for personalisation of delivered results), weight of interest represented in the system with an integer number, which allows for defining intensity of a given interest.

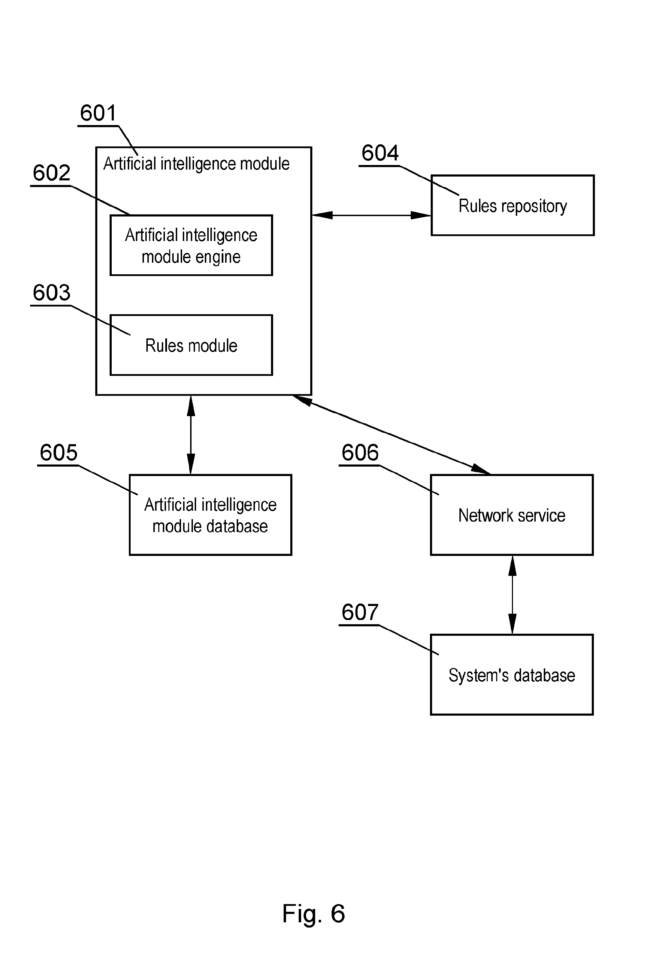

Fig. 6 presents an organisation of an artificial intelligence module 601 located at system's server. The engine of the artificial intelligence module 602 is a component performing tasks ordered by the server of the geolocation system, which is a main server application of the system. The module 602 is a front-end vis a vis internal components of the artificial intelligence module 601. As a part of the artificial intelligence module, a rules module 603 has been used as a solution performing task of the rules engine. The task of the module is running reasoning based on available domain data (treated as facts) and rules defined in a rules language. Based on results of the engine, conclusions will be generated (a list of advertisements for presentation to a recipient, a list of points of interest related to a user and his location).

The rules module 603 is bidirectionally connected to a repository of rules 604, which allows for management and design of business rules.

The artificial intelligence module 601 is bidirectionally connected to a database 605 of the artificial intelligence module. The database 605 stored information generated by the engine of the artificial intelligence module by reasoning. The database also stores current context of users, sessions and deducted facts.

The artificial intelligence system is supplemented with a network module 606 bidirectionally connected to the artificial intelligence module 601. Services provided by this service will be a front-end for the database. They will not address any actions of data storage in the database but only reading and passing to the artificial intelligence module, for example by a SOAP protocol. The service may be implemented wit a use of Apache CXF 2.3.3 software running on Jetta server version 6. Such approach gives lightness of the solution and cost reduction of the front-end.

The network module 606 is bidirectionally connected to a database of the geolocation service.

## Claims

1. System for management of advertising services with a use of data on client's location, comprising
- a server (401) bidirectionally connected to at least one client device (403),
- wherein the server comprises a database (402a) for storing information on a profile of at least one user being in possession of the client device, for storing information services data including area covered by such services,
- wherein the client device (403) is configured to send, to the server, information on its location,
- whereas the server (401) is configured to generate a response, based on a received information on location of the client device (403), comprising information matching the profile of the user being in possession of the client device.

2. The system according to claim 1, **characterised in that** the information on location is retrieved by the client device from a GPS or A-GPS or Cell ID system.

3. The system according to claim 1, **characterised in that** the user's profile comprises information on which categories of information are among user's interests.

4. The system according to claim 1, **characterised in that** the server is configured to include in the generated response area located nearby received location.

5. The system according to claim 1, **characterised in that** the server is configured to store in a memory maps of areas subject to informational services.

6. The system according to claim 1, **characterised in that** the server is configured to receive, from the client device, in addition to information on location, information on a point in time, the return information from the server shall concern.

7. The system according to claim 1, **characterised in that** the server is configured to process the received information in order to create a statistical database for automatic recognition of preferences of a selected user and/or popularity of a given service.

8. The system according to claim 1, **characterised in that** the server is configured to store in a non-volatile memory data of user's profile comprising information on frequency the server is to send messages to a client device.

9. The system according to claim 1, **characterised in that** the server is configured to, while updating a user's profile, utilise a case reasoning method or neuron network or genetic algorithm or any combination of the aforementioned methods.

10. Method for management of advertising services with a use of data on client's location, comprising
- linking with a bidirectional connection, a server to at least one client device,
- storing at the server, in a database, information on a profile of at least one user being in possession of the client device, and storing information services data including area covered by such services,
- sending from the client device, to the server, information on its location,
- generating at the server a response, based on a received information on location of the client device, comprising information matching the profile of the user being in possession of the client device.

11. The method according to claim 10, **characterised in that** the information on location is retrieved by the client device from a GPS or A-GPS or Cell ID system.

12. The method according to claim 10, **characterised in that** the user's profile comprises information on which categories of information are among user's interests.

13. The method according to claim 10, **characterised in that** the server includes in the generated response, area located nearby received location.

14. The method according to claim 10, **characterised in that** the server stores in a non-volatile memory maps of areas subject to informational services.

15. The method according to claim 10, **characterised in that** the server receives, from the client device, in addition to information on location, information on a point in time, the return information from the server shall concern.
